# EUROPEAN PATENT APPLICATION

(11) **EP 3 536 527 A1**
(43) Date of publication of application: **11.09.2019**
(21) Application number: 19160973.4
(22) Date of filing: 06.03.2019
(51) Int. Cl.: B60H 1/00, B01D 46/44, B60H 3/06

(54) **CABIN AIR TREATMENT APPARATUS FOR AN AGRICULTURAL MACHINE WITH AIR FLOW RATE CONTROL**

(30) Priority: 07.03.2018 IT 201800003326
(71) Applicant: DENSO THERMAL SYSTEMS S.p.A., 10046 Poirino (Torino) (IT)
(72) Inventor: DAVTER, Massimo, I-10046 POIRINO (Torino) (IT); CONTENTO, Leone, I-10046 POIRINO (Torino) (IT)
(74) Representative: Vanzini, Christian

(57) **Abstract**

Cabin air treatment system for an agricultural machine, comprising a first and second external air inlet (11), a filtration system (20), an HVAC system (30), and a cabin air supply outlet. The filtration system comprises a first filter (21) for effecting a filtration of at least one among aerosols and vapors and arranged at the first external air inlet (11), a pressurization blower (22) for drawing air from the first external air inlet (11) and delivering it to the HVAC system (30), which is arranged directly connected downstream of the filter (21), and a second filter arranged at the second external air inlet. The system further comprises a flow meter (23a) connected downstream of the filter (21) and the pressurization blower (22) upstream of the HVAC system (30). The flow meter is configured to provide a flow rate measurement signal indicating a flow rate of incoming air through the filter (21) and flowing to the HVAC system (30).

## Description

The present invention refers to a cabin air treatment apparatus for an agricultural machine, comprising
a first and a second external air inlet,
a filtration system connected downstream of the external air inlets,
an HVAC system connected downstream of the filtration system, and
a cabin air supply outlet connected downstream of the HVAC system,
wherein the filtration system comprises:
- a first filter for effecting a filtration of at least one among aerosols and vapors, and arranged at the first external air inlet,
- a second filter for effecting mechanical dust filtration and arranged at the second air inlet, and
- a pressurization blower for drawing air from the external air inlet and delivering it to the HVAC system, said blower being arranged directly connected downstream of the filter,

Such an apparatus is described, for example, in the publication WO 2015/159248 by the same Applicant.

The new standards for the protection of operators of agricultural machinery, in particular the European standard EN 15695, will require manufacturers of higher category filters (in particular category 4 filters) to declare the maximum flow rate that the filter supports during the filtration process.

One of the objects of the present invention is to provide an improved apparatus for the treatment of air in the cabin of an agricultural machine.

Therefore, an apparatus of the type defined above is the object of the invention, which further comprises a flow meter connected downstream of the first filter and the pressurization blower and upstream of the HVAC system, said flow meter being configured to provide a flow rate measurement signal indicative of an air flow entering through the first filter and the HVAC system.

The apparatus according to the invention allows the amount of air that passes through the filter to be controlled.

In this way, through a control unit of the apparatus that manages the latter based on the signal provided by the flow meter, it is possible to:
- ensure the minimum air exchange measurement of 43 m³/h as required by the general indoor air regulations,
- use more than one filter dividing up in an equivalent manner the 43 m³/h provided for in the aforementioned legislation.
- maintain a pressure in the cabin with constant values decided a priori and controlled according to the quantity of air introduced, ensuring to those who use the vehicle in the distribution of hazardous substances that no type of contaminated dust/vapor is sucked in from the outside.

With the invention it is therefore possible to:
- control and adapt the ventilation to the filter clogging conditions upstream of the flow meter, with the consequence that the filter life may also be determined (with a filter guaranteed by the manufacturer for a rated life, e.g. 300h, with a predetermined flow rate of 43 m³/h, the actual life will be determined based on the flow rate measurements relating to the conditions with which the filter was maintained during operation).
- use any type of filter category (i.e. any type of pressure drop), without requiring the operator to first recognize the category of filter used, because the system will be able to determine, by means of the pressure drop and the quantity of air measured, which type of filter is involved in comparison with the limit values set by the apparatus's control unit.

Moreover, for example when replacing the used filter with a new one, the system, according to the invention, will be able to automatically decrease the rotation speed of the blower, because a lower pressure drop will be measured compared to the used filter.

Preferred embodiments of the invention are defined in the dependent claims, which are intended as an integral part of the present description.

Further characteristics and advantages of the apparatus according to the invention will be made clearer by the following detailed description of an embodiment of the invention, given with reference to the attached drawings which are provided purely as non-limiting illustrations, wherein:
- Figure 1 is a perspective view of a roof of an agricultural machine provided with a treatment apparatus according to the invention;
- Figure 2a is a plan view of the roof of Figure 1, with the cover removed;
- Figure 2b is an enlarged plan view of a part of the roof with the cover removed;
- Figure 3 is a plan view of the part shown in Figure 2, with the treatment apparatus also removed;
- Figure 4 is a schematic view of an air inlet branch of the apparatus;
- Figures 5 to 9 are sectional views of the roof, showing different operating configurations of the treatment apparatus.

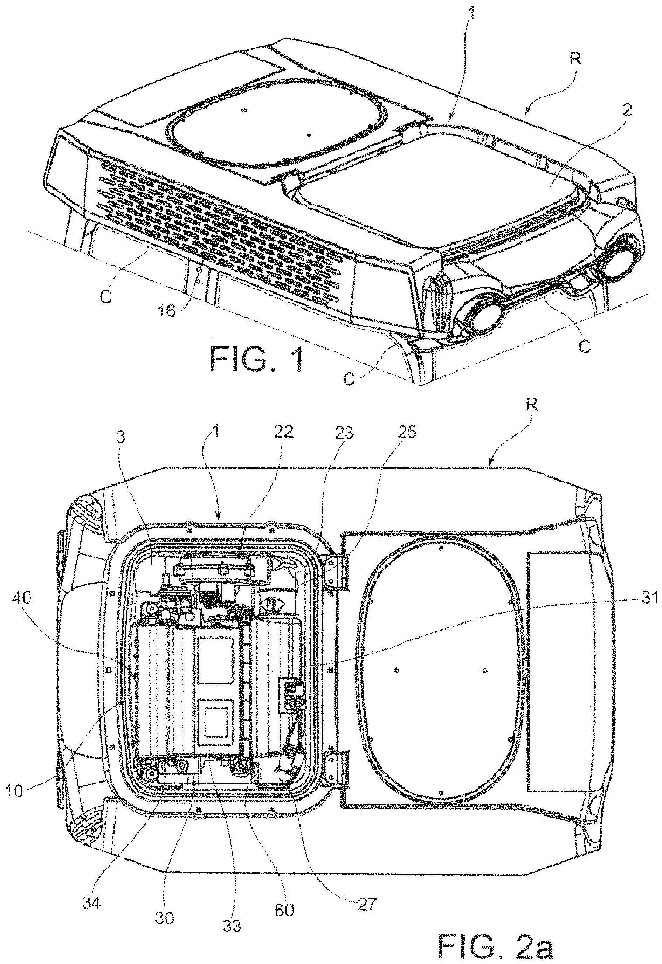

Figures 1 and 2a show a roof R of an agricultural machine; an area under the roof R occupied by the cabin of the agricultural machine is indicated at C. According to the regulations for exposure to hazardous substances, the cabin must be insulated and pressurized with respect to the external environment (at least as far as the higher safety categories are concerned).

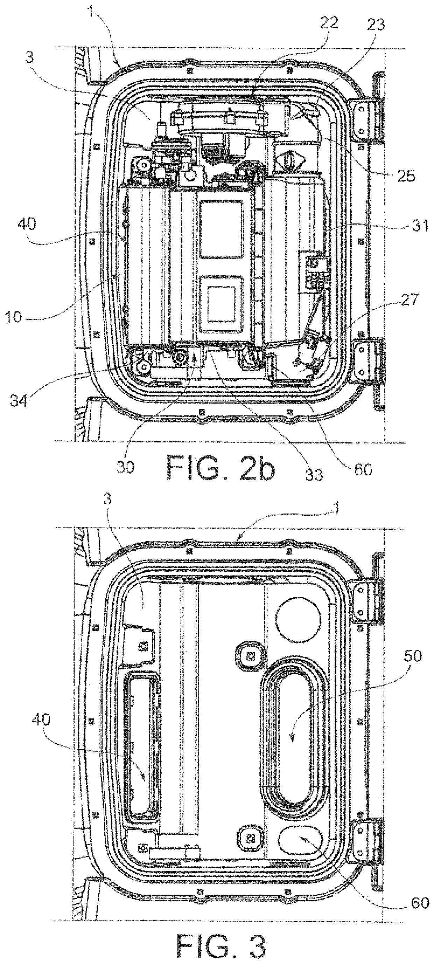

A box 1, hermetically closed by a cover 2, is placed on the roof R of the agricultural machine. Figure 2a shows the roof R with the box 1 from which the cover 2 has been removed; in particular, a gasket placed along a perimetric edge of the box is visible. As may also be seen in Figure 2b, the box 1 forms a space 3, wherein a part of an air treatment apparatus 10 according to the invention is placed.

The air treatment apparatus essentially comprises a first and a second external air inlet 11 , 16, formed through the walls of the box 1, through which inlets air is drawn from the external environment, a filtration system 20 connected downstream of the external air inlets 11, 16, an HVAC system 30 connected downstream of the filtration system 20, and a cabin air supply outlet 40 connected downstream of the HVAC system 30 (visible in Figure 3), through which treated air is supplied to the cabin C at a pressure greater than the pressure of the external environment.

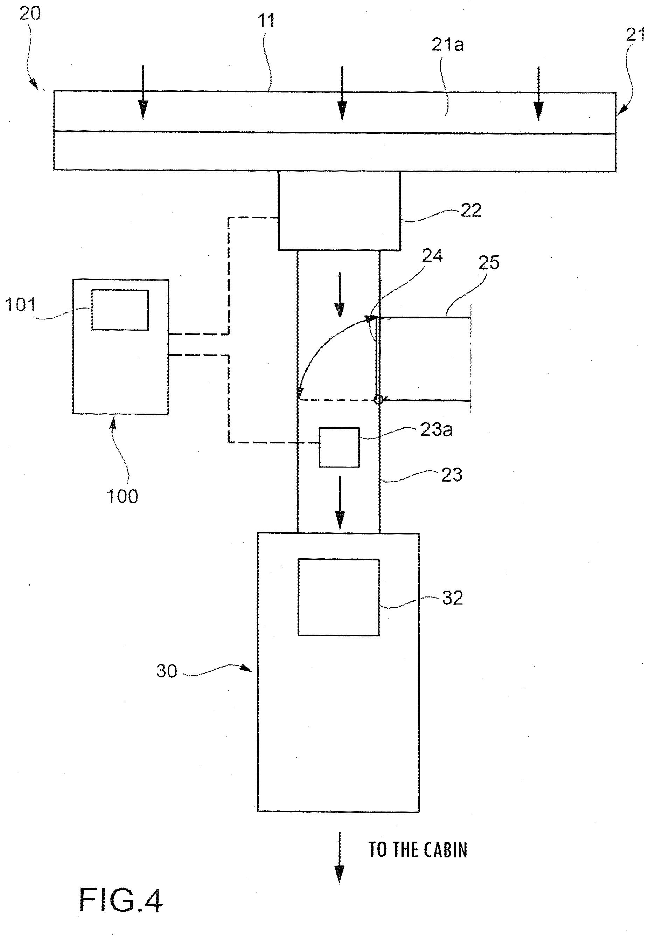

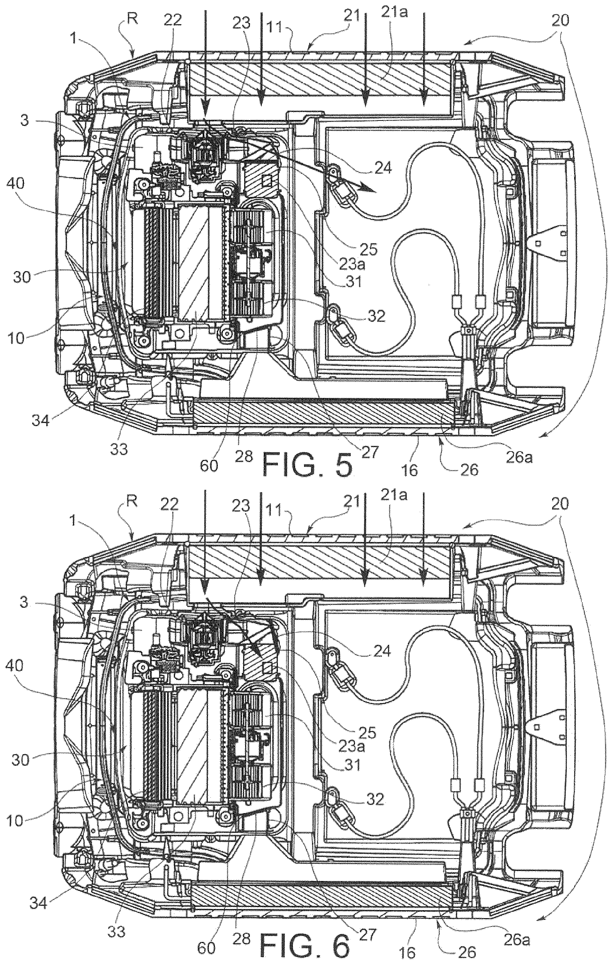

With reference to Figures 4 and 5, the filtration system 20 comprises a first filter 21 for effecting a filtration of at least one among dust, aerosols and vapors, arranged at the first air inlet 11, and a blower 22 for drawing air from the first air inlet 11 and delivering it to the HVAC system 30, this blower being arranged directly connected downstream of the first filter 21 and inside the box 1.

An equivalent hole (not shown) is conventionally provided inside the cabin to adjust the pressurization of the environment inside the cabin.

The first filter 21 comprises a filter body 21a. Preferably, the filter body 21a is a filter chosen from among the known filters capable of suppressing dust, aerosols and vapors, i.e. a filter of category 4 according to the European standard EN 15695. The first air inlet 11 is also configured to open when the pressure at the filter 21 is lower than the pressure of the external environment, and to close when the pressure at the filter 21 is higher than the pressure of the external environment.

The filter 21 is fixed to the box 1, and its air outlet is connected to the pressurization blower 22, placed within the box 1, through sealing means not shown. In the illustrated example, the blower 22 is of the centrifugal type, and its outlet is connected, through a conduit 23, to the inlet of the HVAC system 30.

The conduit 23 is provided with an air distribution valve 24, shown schematically in Figures 4 to 9, whereby the first air inlet 11 is in selectively enabled or disabled communication with the HVAC system 30, as explained subsequently.

A flow meter 23a is arranged along the conduit 23, connected downstream of the filter 21 and the pressurization blower 22 and upstream of the HVAC system 30. The flow meter 23a is configured to provide a flow rate measurement signal indicating a flow rate of incoming air through the filter 21 and flowing to the HVAC system 30.

With reference to Figure 4, a control unit 100 of the apparatus is configured to control the apparatus based on the flow rate measurement signal provided by the flow meter 23a. Figure 4 shows the connections of the control unit 100 with the components of the apparatus that are of interest for the purposes of the present discussion. It is clear that the control unit 100 is connected to other components normally involved in the operation of the air treatment apparatus.

The control unit 100 of the apparatus may be configured to adjust the rotation speed of the blower 22 based on the flow rate measurement signal provided by the flow meter.

Moreover, the control unit 100 of the apparatus may be configured to determine the usage level of the filter 21 based on the flow rate measurement signal provided by the flow meter 23a.

The control unit 100 may be configured to compare the value of the flow rate measurement signal with a reference value programmed or stored in the apparatus (e.g. the value of 43 m³/h required by the regulations for indoor environments) and, if the value of the flow rate measurement signal is lower than the reference value, increase the rotation speed of the pressurization blower 22.

For example, if a new category 4 filter approved for a flow rate of 50 m³/h (and a filter with low permeability) is installed, the control unit 100 uses the flow meter 23a to detect a decrease in the flow rate entering through the filter 21 relative to the reference value, and therefore controls the pressurization blower 22 to increase the number of revolutions until an effective flow rate around the reference value of 43 m³/h is reached. The control unit 100 is able to discriminate between the case wherein a filter with a higher permeability is replaced with a filter with a lower permeability, and the case wherein a clogged filter is detected, analyzing the variation over time of the flow rate measurements. The former case is associated with a sudden time variation, while the latter is associated with a regular variation.

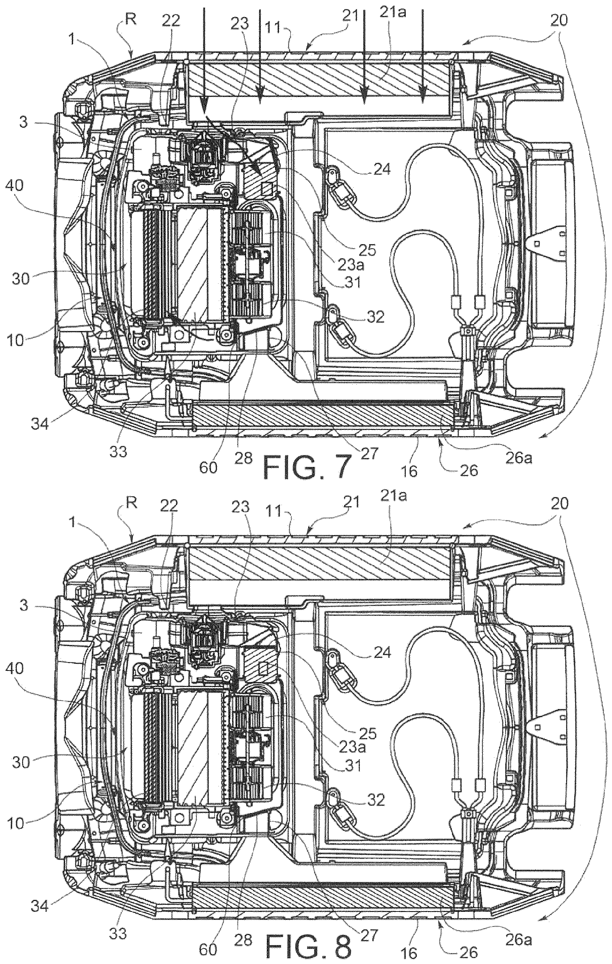

If a lower category filter, for example, category 2, is incorrectly installed as the first filter 21 or if no filter is installed at all, the control unit 100 detects a flow rate higher than the reference value when the apparatus is started and thus activates an alarm state. This alarm state may provide for the activation of acoustic and/or visual alarms, the isolation of the cabin as shown in Figure 8 and/or the instantaneous shutdown of the apparatus.

Moreover, the control unit 100 of the apparatus may be configured to compare the flow measurement signal with a table of reference values stored in a memory 101 associated with the control unit 100, and to recognize the category of the filter based on this comparison.

Through the conduit 23 and the air distribution valve 24, the air inlet 11 is further connected with a purge conduit 25 connected to the outside and provided for carrying out a cleaning of the first filter 21, as will be explained subsequently.

With reference to Figure 5, the filtration system 20 further comprises a second filter 26 for effecting mechanical dust filtration placed at the second air inlet 16.

The second filter 26 comprises the filter body 26a. Preferably, the filter body 26a is a category 2 filter according to the European standard EN 15695, and therefore a lower category than the first filter 21. The second air inlet 16 is further configured to open when the pressure at the filter 26 is lower than the pressure of the external environment, and to close when the pressure at the filter 26 is higher than the pressure of the external environment.

The filter 26 is fixed to the box 1, and its air outlet is connected in a sealed way to a passage formed through a wall of the box 1, which, at its inner end, is connected in a sealed way via a conduit 27 to the inlet of the HVAC system 30.

The conduit 27 is equipped with an air distribution valve 28, schematically represented in Figures 5 to 9, through which the second air inlet 16 is in selectively enabled or disabled communication with the HVAC system 30, as will be explained subsequently. Through the conduit 27 and the air distribution valve 28, the external air inlet 16 is further connected with the internal environment of the box 1 to keep the second filter 26 under pressure, as will be explained subsequently.

The HVAC system 30 is of a conventional type; fresh and recycled air to be supplied to the cabin C is dehumidified and brought to the desired temperature. In a conventional way, the HVAC system 30 may comprise an air mixing plenum 31, one or more blowers 32 (visible in Figures 4 to 9) separate from the pressurization blower 22, an evaporator 33 and a heater 34.

The cabin C is also connected to the air mixing plenum 31 of the HVAC system 30 through an air recycling opening 50 formed on the box 1, visible in Figure 3.

The box 1 also has a levelling opening 60, visible in Figure 3, for placing the internal space 3 of the box 1 in communication with the cabin C to level the pressure inside the box 1 with the pressure inside the cabin C.

The operation of the individual components of the apparatus according to the invention and the monitoring of the pressure and HVAC conditions within the cabin C are controlled by an electronic control unit 100.

With reference to Figures 5 to 9, different operating configurations of the air treatment apparatus according to the invention will now be illustrated.

Figure 5 shows a cleaning configuration, which may be adopted when the apparatus is started up. Such a configuration may be adopted when the control unit 100, using the flowmeter 23a, detects a clogged condition in the first filter 21. In this configuration, the distribution valve 24 associated with the conduit 23 connecting the first external air inlet 11 to the HVAC system 30 is positioned so as to disable the communication between the first external air inlet 11 and the HVAC system 30, and to enable the communication between the first external air inlet 1 1 and the purge conduit 25. The distribution valve 28 associated with the conduit 27 connecting the second external air inlet 16 to the HVAC system 30 is positioned so as to disable the communication between the second external air inlet 16 and the HVAC system 30. The arrows depicted in Figure 5 represent the air path created by this configuration. The air entering from the air inlet 11, having been drawn in by the blower 22, is used to remove any deposits within the first filter 21 and to discharge them to the outside through the purge conduit 25.

Figure 6 shows a configuration of initial pressurization of the apparatus. In this configuration, the distribution valve 24 associated with the conduit 23 connecting the first external air inlet 11 to the HVAC system 30 is positioned so as to enable the communication between the first external air inlet 11 and the HVAC system 30, and to disable the communication between the first external air inlet 11 and the purge conduit 25. The distribution valve 28 associated with the conduit 27 connecting the second external air inlet 16 to the HVAC system 30 remains in the position which prevents communication between the second external air inlet 16 and the HVAC system 30. The arrows depicted in Figure 6 represent the air path created by this configuration. The air entering from the air inlet 11, having been drawn in by the blower 22, passes through the first filter 21 and the HVAC system 30, and then through the cabin air supply outlet 40 to pressurize the cabin C.

Figure 7 shows a configuration of steady-state pressurization of the apparatus. In this condition, the distribution valve 24 associated with the conduit 23 connecting the first external air inlet 11 to the HVAC system 30 remains in the position which allows communication between the first external air inlet 11 and the HVAC system 30, and the distribution valve 28 associated with the conduit 27 connecting the second external air inlet 16 to the HVAC system 30 remains in the position which prevents communication between the second external air inlet 16 and the HVAC system 30. This position of the distribution valve 28 also allows communication between the second external air inlet 16 and the internal space 3 of the box 1. The arrows shown in Figure 7 represent the path of the air. The air which continues to enter the cabin C along the path indicated above with reference to Figure 6 also passes from the cabin C into the space 3 within the box 1, through the levelling opening 60, so that it also pressurizes the interior of the box 1, and passes from the space 3 into the conduit 27 in communication with the space 3, so that it also pressurizes the second filter 26.

Figure 8 shows a configuration of anomaly detection in the apparatus. In this condition, the distribution valve 24 associated with the conduit 23 connecting the first external air inlet 1 1 to the HVAC system 30 is positioned so as to disable the communication between the first external air inlet 11 and the HVAC system 30, and the distribution valve 28 associated with the conduit 27 connecting the second external air inlet 16 to the HVAC system 30 is positioned so as to disable the communication between the second external air inlet 16 and the HVAC system 30. In this way, external air is prevented from entering the cabin C through the two external air inlets 11, 16.

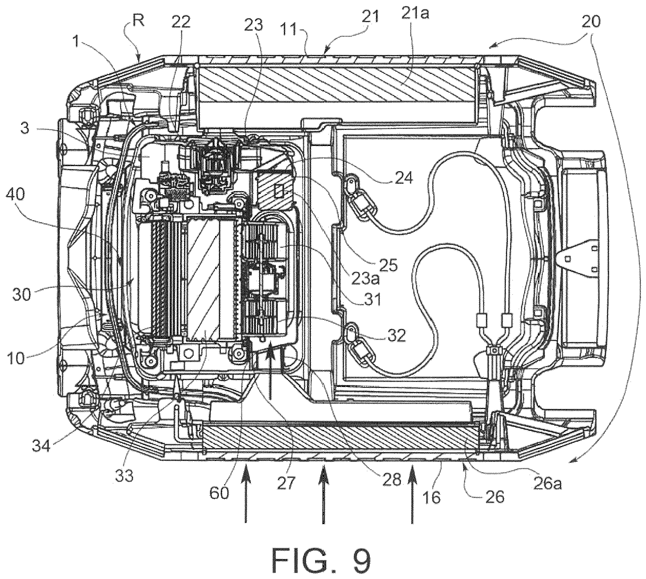

Figure 9 shows an operating configuration with the lower category filter associated with the second external air inlet. This configuration may be used as an alternative to the higher category operating configuration (shown in the preceding Figures) when the operating conditions do not require a high degree of protection against contaminants. In this configuration, the distribution valve 24 associated with the conduit 23 connecting the first external air inlet 11 to the HVAC system 30 is positioned so as to disable the communication between the first external air inlet 11 and the HVAC system 30, and the distribution valve 28 associated with the conduit 27 connecting the second external air inlet 16 to the HVAC system 30 is positioned so as to enable the communication between the second external air inlet 16 and the HVAC system 30. The arrows depicted in Figure 9 represent the air path created by this configuration. The air entering from the air inlet 16, having been drawn in by the blower 32 of the HVAC system, passes through the second filter 26 and the HVAC system 30, and then through the cabin air supply outlet 40 to pressurize the cabin C. The air which continues to enter the cabin C also passes from the cabin C into the space 3 within the box 1, through the levelling opening 60, so that it also pressurizes the interior of the box 1.

## Claims

1. Cabin air treatment apparatus for an agricultural machine, comprising
a first and a second external air inlet (11, 16),
a filtration system (20) connected downstream of the external air inlets (11, 16),
an HVAC system (30) connected downstream of the filtration system (20), and
a cabin air supply outlet (40) connected downstream of the HVAC system (30),
wherein the filtration system comprises:
- a first filter (21) for effecting a filtration of at least one among aerosols and vapors, and arranged at the first external air inlet (11),
- a second filter (26) for effecting mechanical dust filtration, and arranged at the second air inlet (16), and
- a pressurization blower (22) for drawing air from the external air inlet (11) and delivering it to the HVAC system (30), said blower being arranged directly connected downstream of the filter (21),
said apparatus being **characterized by** further comprising a flow meter (23a) connected downstream of the first filter (21) and of the pressurization blower (22) and upstream of the HVAC system (30), said flow meter being configured to make available a flow rate measurement signal indicative of an air flow rate entering through the first filter (21) and flowing to the HVAC system (30).

2. Apparatus according to claim 1, wherein a control unit (100) of the apparatus is configured to control the apparatus based on the flow rate measurement signal made available by the flow meter (23a).

3. Apparatus according to claim 2, wherein a control unit (100) of the apparatus is configured to adjust the rotation speed of the pressurization blower (22) based on the flow rate measurement signal made available by the flow meter (23a).

4. Apparatus according to claim 3, wherein the control unit (100) is configured to compare the value of the flow rate measurement signal with a reference value and, if the value of the flow rate measurement signal is lower than the reference value, increase the rotation speed of the pressurization blower (22).

5. Apparatus according to claim 4, wherein, if the value of the flow rate measurement signal is greater than the reference value, the control unit (100) is configured to activate an alarm state.

6. Apparatus according to one of claims 2 to 5, wherein a control unit (100) of the apparatus is configured to determine the usage level of the filter (21) based on the flow rate measurement signal provided by the flow meter (23a).

7. Apparatus according to one of claims 2 to 6, further comprising a purge line (25) connected downstream of the first filter (21), wherein a control unit (100) of the apparatus is configured to disable fluid communication between the first external air inlet (11) and the HVAC system (30), and enable fluid communication between the first external air inlet (11) and the purge line (25) based on a value of the flow rate measurement signal indicative of a clogged condition of the first filter (21).

8. Apparatus according to one of the claims 2 to 7, wherein a control unit (100) of the apparatus is configured to compare the flow measurement signal with a table of reference values stored in a memory (101) associated with the control unit (100) and to recognize the category of the first filter (21) according to European standard EN 15695, based on said comparison.
